# EUROPÄISCHE PATENTSCHRIFT

(11) **EP 3 504 677 B1**
(45) Veröffentlichungstag und Bekanntmachung des Hinweises auf die Patenterteilung: **09.03.2022**
(21) Anmeldenummer: 17754718.9
(22) Anmeldetag: 21.08.2017
(51) Int. Cl.: G06Q 30/06, G07F 17/00, B60R 25/20, G06Q 10/02, G07C 9/00

(54) **VERFAHREN UND SYSTEM ZUM ÖFFNEN UND/ODER NUTZUNG MINDESTENS EINES FAHRZEUGS**
METHOD AND SYSTEM FOR OPENING AND/OR USING AT LEAST ONE VEHICLE
PROCÉDÉ ET SYSTÈME PERMETTANT D'OUVRIR ET/OU D'UTILISER AU MOINS UN VÉHICULE

(30) Priorität: 29.08.2016 DE 102016116042
(43) Veröffentlichungstag der Anmeldung: 03.07.2019
(73) Patentinhaber: Ipgate Capital Holding AG, 8808 Pfäffikon (CH)
(72) Erfinder: LEIBER, Thomas, 22203 Rogoznica (HR)
(74) Vertreter: Würmser, Julian
(86) Internationale Anmeldenummer: PCT/EP2017/071016
(87) Internationale Veröffentlichungsnummer: WO 2018/041652

(56) Entgegenhaltungen:
- EP-A1- 2 743 868
- EP-A2- 0 870 889
- WO-A1-2016/054276
- US-A1- 2004 008 103
- US-A1- 2011 112 969
- ALLI G ET AL: "Green Move: Towards next generation sustainable smartphone-based vehicle sharing", SUSTAINABLE INTERNET AND ICT FOR SUSTAINABILITY (SUSTAINIT), 2012, IEEE, 4. Oktober 2012 (2012-10-04), Seiten 1-5, XP032282698, ISBN: 978-1-4673-2031-3

## Beschreibung

Die Erfindung betrifft ein Verfahren und System zum Öffnen und/oder zur Nutzung wenigstens eines Fahrzeugs.

Batteriebetriebene Fahrzeuge, insbesondere Elektrofahrräder (sogenannte E-Bikes) sowie Pkw oder elektrisch angetriebene Roller, erfreuen sich großer Beliebtheit.

Bei Kraftfahrzeugen haben sich Keyless Go-Systeme mit einem elektronischen bartlosen Schlüssel durchgesetzt. Dabei kann der bartlose Schlüssel berührungslos ein Fahrzeug öffnen und verriegeln. Das Fahrzeug kann auch per Funk zum Start freigegeben werden.

Bei gängigen Keyless Go-Systemen befinden sich auf dem bartlosen Schlüssel sowie auf dem Fahrzeug Pseudozufallszahlengeneratoren, die mit einem gleichen Seed-Wert initialisiert sind. Ein Seed-Wert stellt einen Startwert für einen Zufallszahlengenerator dar, mit dem dieser initialisiert wird. Dadurch erzeugen die Pseudozufallszahlengeneratoren auf dem bartlosen Schlüssel und auf dem Fahrzeug die gleiche Zahlenreihenfolge.

Um das Fahrzeug zu öffnen, generiert der bartlose Schlüssel einen Remotecode, der per Funk an das Fahrzeug gesendet wird. Das Fahrzeug generiert beim Empfang einen Lokalcode unter Verwendung des auf dem Fahrzeug gespeichert Seed-Wertes und vergleicht diesen mit dem empfangenen Remotecode. Sind die beiden Codes identisch, so wird das Fahrzeug geöffnet.

Ein Nachteil des bartlosen Schlüssels ist, dass der Seed-Schlüssel bei Auslieferung des Fahrzeugs bzw. des Schlüssels an den Kunden fest in diesen einprogrammiert wird. Der bartlose Schlüssel lässt sich daher nicht bei Car-Sharing-Diensten einsetzen, bei denen sich eine Vielzahl an Kunden dasselbe Fahrzeug teilen. Car-Sharing-Anbieter verwenden einerseits eine RFID-basierte Lösung, bei der der Fahrer eine Karte mit integriertem RFID-Chip an ein Lesegerät am Fahrzeug halten muss. Die Karte überträgt einen Code an das Fahrzeug, der von dem Fahrzeug über eine Internet-Verbindung an einem Server gesendet wird und von diesem überprüft wird. Ist der Code bekannt, so sendet der Server einen entsprechenden Befehl an das Fahrzeug und das Fahrzeug wird Fahrzeug geöffnet.

Andererseits verwenden Car-Sharing-Anbieter Applikationen auf mobilen Endgeräten, wie zum Beispiel Smartphones, um das Fahrzeug zu öffnen. Dabei sendet der Benutzer beispielsweise eine Anfrage zum Öffnen eines Fahrzeugs an einen Server, der eine Benutzerauthentifizierung durchführt und bei erfolgreicher Authentifizierung einen Befehl zum Öffnen des Fahrzeugs an das Fahrzeug sendet.

Zur Nutzung von Car-Sharing-Diensten ist es daher notwendig, entweder eine zusätzliche Karte mitzuführen oder aber eine Internet-Verbindung, die von einem Smartphone und dem Fahrzeug bereitgestellt wird.

Eine Offline-Kommunikation zwischen mobilem Endgerät und Fahrzeug ist bisher nicht möglich.

US2011/0112969A1 offenbart ein Zugangssteuersystem und Verfahren für ein Fahrzeug.

Ausgehend vom Stand der Technik ist es Aufgabe der vorliegenden Erfindung, ein System und ein Verfahren bereitzustellen, die die vorstehend beschriebenen Nachteile adressieren. Insbesondere ist es Aufgabe der vorliegenden Erfindung, ein System und Verfahren bereitzustellen, das es einem Fahrer ermöglicht, ein Fahrzeug ohne bestehende Internet-Verbindung durch ein mobiles Endgerät zu öffnen. Ferner soll es Flottenbetreibern ermöglicht werden, Auslastungsplanungen durchzuführen, auch wenn die Fahrer nicht über eine Internet-Verbindung verfügen.

Die Aufgabe wird gelöst durch ein Verfahren, umfassend die Schritte:
a) Empfangen, durch ein mobiles Endgerät, insbesondere ein Smartphone, einer Identifikationskennung, die einem Zielfahrzeug zugeordnet ist;
b) Übermittlung der Identifikationskennung, insbesondere über ein Mobilfunknetzwerk, an einen Server;
c) Empfangen eines Schlüsseldatensatzes von dem Server, insbesondere von einem mobilen Endgerät;
d) Übermitteln des Schlüsseldatensatzes und/oder einen, basierend auf dem Schlüsseldatensatz generierten Code als Remotecode an das Zielfahrzeug, insbesondere über eine Direktverbindung und/oder Adhoc-Netz zwischen dem Zielfahrzeug und dem mobilen Endgerät;
e) Empfangen des Remotecodes durch das Zielfahrzeug;
f) Generierung mindestens eines Lokalcodes durch das Zielfahrzeug;
g) Vergleich des Remotecodes mit dem mindestens einen Lokalcode durch das Zielfahrzeug;
h) Öffnen und/oder Freigeben des Zielfahrzeugs und/oder Ausführen eines Fahrzeugbefehls auf dem Zielfahrzeug, wenn mindestens einer der Lokalcodes mit dem Remotecode übereinstimmt.

Ein wesentlicher Vorteil der Erfindung besteht darin, dass zwischen dem Zielfahrzeug und dem mobilen Endgerät eine Verbindung zur Kommunikation besteht, z.B. eine Direktverbindung und/oder ein Ad hoc-Netz. Das mobile Endgerät kann daher, ohne eine Internet-Verbindung zu benötigen, einen Code zum Öffnen des Zielfahrzeugs an das Zielfahrzeug senden. Auch das Zielfahrzeug muss nicht über eine Internet-Verbindung verfügen, wodurch insbesondere der Energieverbrauch des Fahrzeugs im Standby-Betrieb gesenkt wird sowie keine Kosten für die Einrichtung einer Internetverbindung im Fahrzeug anfallen.

Erfindungsgemäß kann der gesamte Schritt b) optional sein. Der erfindungsgemäße Effekt lässt sich auch erzielen, wenn an Stelle der Identifikationskennung nur eine Gruppenauswahl von Zielfahrzeugen an den Server übermittelt wird und der Server, basierend auf der Gruppenauswahl, ein konkretes Zielfahrzeug mit zugehöriger Identifikationskennung auswählt. Die Gruppenauswahl kann in Form der Angabe/Übermittlung eines Fahrzeugtyps (Boot, Fahrrad, Auto) und/oder eines Standorts (alle Fahrzeuge, die in Augsburg, Bremen oder München stationiert sind) und/oder einer zeitlichen Verfügbarkeit (am Freitag zur Miete verfügbar) erfolgen. Das erfindungsgemäße Verfahren kann in dieser Form den Schritt des Auswählens eines Zielfahrzeugs unter Berücksichtigung der übermittelten Gruppenauswahl umfassen. Sollten mehrere Fahrzeuge verfügbar sein, die die Gruppenkriterien erfüllen, kann die Auswahl innerhalb dieser Gruppe zufällig oder basierend auf weiteren Parametern, z.B. Auslastung des Fahrzeugs, vorgenommen werden. Vorzugsweise wird die Identifikationskennung dann an das mobile Endgerät kommuniziert.

Ein weiterer Vorteil der Erfindung besteht darin, dass das mobile Endgerät zu einem frühen Zeitpunkt über den Code zum Öffnen bzw. Freigeben des Zielfahrzeugs und/oder Ausführen des Fahrzeugbefehls auf dem Zielfahrzeug verfügt. So kann der Fahrer zum Beispiel zu Hause, wenn er über eine WLAN-Verbindung mit dem Internet verbunden ist, den Schlüsseldatensatz vom Server auf dem mobilen Endgerät empfangen.

Das beschriebene Verfahren kann dazu verwendet werden, eine Vielzahl von Fahrzeugen zu betreiben. Insbesondere können Flottenbetreiber (z.B. Mietwagenfirmen, Firmenpools bestehend aus PKW, Fahrrädern und E-Bikes) effizient die Auslastung ihrer Flotte planen, indem Benutzer von Fahrzeugen frühzeitig mit entsprechenden Codes versorgt werden und die Nutzungszeit vorab in der Auslastungsplanung verwendet werden kann. Insbesondere in Umgebungen, in denen Benutzer nicht über eine ständige Internet-Verbindung verfügen, zum Beispiel auf dem Wasser oder Golfclubs in ländlichen Gebieten, ist die Verwendung beschrieben Verfahrens von Vorteil. Wenn zum Beispiel ein mobiles Endgerät dazu verwendet wird, ein Boot, zum Beispiel ein Motorboot, zu starten, ist oftmals nicht sichergestellt, dass eine Internetverbindung besteht.

Durch die frühzeitige Code-Übermittlung kann das Verfahren auch sinnvoll für Ferienressorts oder Golfclubs oder Family- oder Social Community-Sharing-Modelle verwendet werden. So kann ein Ferienressort beispielweise alle Mietfahrobjekte in Wasser und Erde verwalten und die Vergabe effizient managen (z.B. Golfwagen, Boote, Fahrräder, E-Bikes, Mietwagen, sonstige elektrische angetriebene Wasserfahrzeuge) und durch das Modell die Verwaltungskosten reduzieren sowie die Auslastung der Objekte maximieren, da die Vergabe automatisiert erfolgen kann. Auch ergeben sich Community-Sharing-Möglichkeiten für Freunde oder Vereinsmitglieder, die gemeinsam die Nutzung von werthaltigen Fahrzeugen in einem Pool verwalten. So kann eine Community gemeinsam z.B. auf Golfwägen, Wasserfahrzeuge und E-Bikes zugreifen.

In einer Ausführungsform handelt es sich bei dem mobilen Endgerät um ein Smartphone, welches mit einer App ausgestattet sein kann, die die entsprechende Funktionalität bereitstellt. Bei dem auszuführenden Fahrzeugbefehl kann es sich um eine Vielzahl an unterschiedlichen Befehlen handeln. Zum Beispiel Öffnen oder Verriegeln des Fahrzeugs, Starten des Motors, Öffnen oder Schließen des Kofferraums bzw. verschlossenen Räumen eines Bootes, Aktivieren einer Heizung/Klimatisierung und/oder Aktivieren bzw. Deaktivieren einer Alarmanlage bzw. Aktivierung von elektrischen Aggregaten (z.B. Seilwinde eines Segelbootes, Außenbordmotor) . Das beschriebene Verfahren ist daher sehr flexibel einsetzbar. In einer Ausführungsform kann der Lokalcode und/oder der Remotecode durch ein Rolling-Code-Verfahren generiert werden und/oder, basierend auf einem Rolling-Code-Verfahren, generiert werden.

Ein Rolling-Code-Verfahren ermöglicht das Verhindern sogenannter "Replay"-Angriffe. Bei Replay-Angriffen fängt ein Angreifer die Kommunikation zwischen dem mobilen Endgerät und dem Fahrzeug ab. Später kann der Angreifer dann die aufgezeichnete Kommunikation verwenden, um das Fahrzeug zu öffnen. Ein Rolling-Code-Verfahren bietet den Vorteil, dass bei jeder Kommunikation zwischen mobilem Endgerät und Fahrzeug ein neuer Remotecode bzw. Lokalcode verwendet wird. Hierzu können zum Beispiel der KeeLoq-Algorithmus oder der Dual KeeLoq-Algorithmus verwendet werden.

Gemäß der Erfindung umfasst der Schlüsseldatensatz einen Seed-Schlüssel wobei der Schlüsseldatensatz von einem/dem mobilen Endgerät empfangen werden kann und das mobile Endgerät den Remotecode unter Verwendung des Seed-Schlüssels generieren kann.

Erfindungsgemäß wird also dem mobilen Endgerät ein Seed-Schlüssel mitgeteilt. Unter Verwendung des Seed-Schlüssels, insbesondere mittels eines Pseudozufallszahlengenerators, kann das mobile Endgerät eine Vielzahl von Remotecodes in einem Rolling-Code-Verfahren generieren. Der Server selbst stellt also keinen Remotecode zur Verfügung, sondern das mobile Endgerät generiert diesen selbst. Dieses hat den Vorteil, dass das mobile Endgerät ohne eine Verbindung zum Server ständig neue Remotecodes generieren kann.

In einer Ausführungsform können ein erster und mehrere weitere Lokalcodes generiert werden und ein Öffnen und/oder Freigeben des Zielfahrzeugs kann nur dann nicht erfolgen, wenn keiner der Lokalcodes mit dem Remotecode übereinstimmt.

In der beschriebenen Ausführungsform können also mehrere Lokalcodes generiert werden, die mit den Remotecodes verglichen werden können. Nur wenn keiner der generierten Lokalcodes mit dem empfangenen Remotecode übereinstimmt, wird das Fahrzeug geöffnet und/oder freigegeben bzw. ein Befehl auf dem Fahrzeug ausgeführt. Die beschriebene Ausführungsform hat den Vorteil, dass die Fehleranfälligkeit des Verfahrens verringert wird. So ist es zum Beispiel möglich, dass Übertragungsfehler beim Übertragen des Remotecodes kompensiert werden können. Zum Beispiel kann es beim Einsatz eines Rolling-Code-Verfahrens vorkommen, dass das mobile Endgerät und das Fahrzeug nicht synchron sind. Das bedeutet, dass das mobile Endgerät einen Remotecode sendet, den das Fahrzeug noch nicht generiert hat. Dies tritt auf, wenn die Verbindung beim Übertragen des Remotecodes abbricht.

In der beschriebenen Ausführungsform kann das Fahrzeug zum Beispiel die nächsten 1000 Lokalcodes, bevorzugt 256, weiter bevorzugt 64 Lokalcodes, generieren und diese mit dem empfangenen Remotecode vergleichen.

In einer Ausführungsform kann der Remotecode nach einmaliger Verwendung durch das Zielfahrzeug seine Gültigkeit verlieren. Für die Sicherstellung des Wiederstartes nach Ausschalten des Fahrzeuges kann dann eine zeitlich befriste Kopplung des mobilen Endgerätes genutzt werden. In einer anderen oder zusätzlichen Ausführungsform stellt das Fahrzeug nach dem (ersten) Öffnen/Freigeben über die Direktverbindung und/oder das Adhoc-Netzwerk ein (weiteres) Geheimnis bereit, dass vorzugsweise auf dem mobilen Endgerät gespeichert und zur erneuten Öffnen/Freigabe genutzt wird. In einer Ausführungsform implementiert ein Fahrzeug zur Umsetzung dieses Mechanismus mindestens zwei Zustände. In einem ersten Zustand kann das Fahrzeug oder eine beliebige Komponente des Fahrzeugs nur mittels eines Remotecodes des Servers geöffnet oder freigegeben werden. Nach der erfolgreichen Verifizierung dieses Remotecodes nimmt das Fahrzeug den zweiten Zustand ein, in dem ein Öffnen/Freigeben mittels des (weiteren) Geheimnisses möglich ist. Dieser Zustand kann zeitlich, z.B. auf den Buchungszeitraum, die Gültigkeit des Remotecodes, etc. begrenzt sein. Alternativ oder zusätzlich implementiert das Fahrzeug ein Verfahren, bei dem der zweite Zustand nach einer Benutzereingabe oder dem Empfangen eines Befehls von dem mobilen Endgerät verlässt und wider in den ersten Zustand zurückkehrt. So kann der Benutzer die Buchung frühzeitig über eine manuelle Eingabe beenden.

In einer (anderen) Ausführungsform mit erhöhter Sicherheit für das erneute Öffnen/Freigeben ein weiterer Remotecode von dem Server erzeugt und übermittelt. Der weitere Remotecode kann zeitlich befristet sein (z.B. 1-10 min) und beispielsweise den Wiederstart des Fahrzeuges sicherstellen. Bei der erneuten Codegenerierung können die zeitliche Berechtigung des Nutzers durch den Server geprüft werden. In einer anderen Ausführungsform werden bereits im Schritt c) mehrere Remotecodes empfangen, die nacheinander gültig sind. Vorzugsweise werden diese mehreren Remotecodes auf dem mobilen Endgerät gespeichert, so dass nach dem "Verbrauchen" des ersten Remotecodes ein (erneutes) Öffnen/Freigeben mit einem nachfolgenden, vorzugsweise schon auf dem Endgerät gespeicherten, Remotecode erfolgen kann.

Es ist von Vorteil, wenn der empfangene Remotecode bzw. optional alle zuvor generierten Remotecodes, ihre Gültigkeit verlieren, sobald ein Remotecode verwendet wurde. Dadurch ist es weiter gewährleistet, dass Replay-Angriffe nicht möglich sind.

In einer Ausführungsform kann ein Remotecode nach einer definierten Zeitspanne seine Gültigkeit verlieren.

Es ist in einer Ausführungsform also möglich, dass ein Remotecode nur über eine begrenzte Gültigkeit verfügt. Der Remotecode kann entweder unendlich lang gültig sein oder zum Beispiel weniger als 5 oder 10 Minuten, bevorzugt weniger als 1 Minute, und weiter bevorzugt weniger als 10 Sekunden, gültig sein. Durch die beschriebene Ausführungsform ist es möglich, dass der Fahrzeugbetreiber die Zeit einschränkt, die ein Fahrer das Fahrzeug nutzen kann. Auch in diesem Zusammenhang können die bereits beschriebenen Mechanismen zum (erneuten) Öffnen/Freigeben verwendet werden.

Der Remotecode (43, 43', 43") kann alternativ oder zusätzlich nur innerhalb eines vorgegebenen Zeitintervalls zum Öffnen und/oder Freigeben des Zielfahrzeugs verwendbar sein.

In einer Ausführungsform können das Zielfahrzeug und der Server oder das mobile Endgerät und der Server jeweils, insbesondere miteinander synchronisierte, Zeitgeber aufweisen, wobei ein Remotecode und ein Lokalcode jeweils kontinuierlich in gleichen Zeitabständen generiert werden können.

Mobiles Endgerät, Zielfahrzeug oder Server können also Zeitgeber aufweisen, wobei ein Zeitgeber durch eine Clock nach dem Stand der Technik umgesetzt sein kann. Die Zeitgeber sind jeweils entweder zwischen Zielfahrzeug und Server oder zwischen mobilem Endgerät und Server miteinander synchronisiert. Das mobile Endgerät und der Server bzw. das Zielfahrzeug und der Server weisen in der beschriebenen Ausführungsform demnach die gleiche Zeitwahrnehmung auf.

Dieses kann dazu verwendet werden, dass jeweils zu gleichen Zeitpunkten Remote- bzw. Lokalcodes generiert werden können. So ist es in der beschriebenen Ausführungsform möglich, dass alle 5 oder 10 Minuten bzw. jede Minute oder alle 10 Sekunden neue Remote- bzw. Lokalcodes generiert werden. Dies erhöht weiter die Sicherheit.

In einer Ausführungsform kann das Verfahren das Senden eines Befehlsdatensatzes von dem mobilen Endgerät zu dem Zielfahrzeug umfassen, wobei der Befehlsdatensatz in mindestens einen Fahrzeugbefehl umfasse kann. Ferner kann das Verfahren in einer Ausführungsform das Empfangen des Befehlsdatensatzes durch das Zielfahrzeug umfassen. Weiter kann in einer Ausführungsform das Verfahren das Ausführen des mindestens einen Fahrzeugbefehls umfassen, wenn der Lokalcode mit dem Remotecode übereinstimmt.

Mit der beschriebenen Ausführungsform ist es also möglich, eine beliebige Anzahl von Fahrzeugbefehlen unter Verwendung eines einzigen Remotecodes auszuführen. Durch die beschriebene Ausführungsform wird also die zu übertragende Datenmenge reduziert.

In einer Ausführungsform kann die Direktverbindung als eine Bluetooth-Verbindung, eine Infrarot-Verbindung, NFC-Verbindung oder als eine WLAN-Verbindung ausgebildet sein.

Die genannten Verbindungstypen haben den Vorteil, dass diese bekannte Techniken darstellen, die von einer Vielzahl von mobilen Endgeräten unterstützt werden.

In einer Ausführungsform kann Schritt d) das Übermitteln eines zukünftigen Zeitpunkts umfassen, wobei der generierte Remotecode zu dem zukünftigen Zeitpunkt gültig ist.

Es ist also möglich, nicht nur Remotecodes zu generieren, die zum Zeitpunkt der Generierung gültig sind, sondern auch Remotecodes, die erst in der Zukunft eine Gültigkeit erlangen. Dadurch ist es möglich, dass ein Fahrer zum Beispiel einen Remotecode bei einer bestehenden Internet-Verbindung von dem Server empfängt und diesen zu einem späteren Zeitpunkt verwendet, wenn keine Internet-Verbindung mehr sicher besteht. Dies erhöht die Übertragungssicherheit und ermöglicht auch eine frühzeitige Nutzungsplanung der Fahrzeuge durch den Betreiber/Eigentümer.

In einer Ausführungsform kann der Remotecode innerhalb eines Zeitfensters, beispielsweise um den zukünftigen Zeitpunkt herum gültig sein.

Es ist also möglich, dass der Remotecode nicht nur genau zu einem zukünftigen Zeitpunkt gültig ist, sondern dass der Remotecode innerhalb einer Zeitspanne, zum Beispiel ca. 60 oder 30 oder 5 Minuten oder 1 Minute lang, gültig ist. Dieses hat den Vorteil, dass nur ein einziger Remotecode für eine gewisse Zeitdauer generiert werden muss. Alternativ kann das Zeitfenster einen Beginn eines Freigebens/Öffnens und eine maximale Nutzungsdauer angeben. Es ist möglich zu planen, wann welcher Fahrer Zugang zu einem Fahrzeug erhält, wobei die Remotecodes in beliebiger Reihenfolge vergeben werden können. In diesem Zusammenhang ist der Server also dazu ausgebildet, mehrere Remotecodes für unterschiedliche Nutzungszeiträume und/oder Benutzer und/oder mobile Endgeräte zu generieren. Die entsprechenden Remotecodes können dann eine einmalige oder in dem Zeitraum fortlaufende Gültigkeit besitzen. Bei der Ausführungsform mit der einmaligen Gültigkeit, können die bereits beschriebenen Mechanismen zum erneuten Öffnen/Freigeben eingesetzt werden.

In einer Ausführungsform kann das Fahrzeug erste und zweite Schlüsseldaten zur Generierung einer ersten Schlüsselsequenz bzw. zweiten Schlüsselsequenz aufweisen. Das Verfahren kann ferner umfassen:
- Empfangen einer Schlüsselinformation, insbesondere von dem mobilen Endgerät auf dem Fahrzeug;
- Auswählen der ersten oder zweiten Schlüsseldaten unter Verwendung der Schlüsselinformationen;
- Generieren mindestens eines Lokalcodes unter Verwendung der ausgewählten Schlüsseldaten;
- Vergleichen des mindestens einen generierten Lokalcodes mit dem empfangenen Remotecode;
- Öffnen und/oder Freigeben und/oder Ausführen eines Fahrzeugbefehls, wenn der Remotecode mit dem mindestens einen generierten Lokalcode der ausgewählten Schlüsseldaten übereinstimmt.

Wenn die Schlüsselinformationen an das Fahrzeug übertragen werden, kann das Fahrzeug unter Verwendung der Schlüsselinformationen erste oder zweite Schlüsseldaten auswählen. Auf Grundlage der Schlüsseldaten kann das Fahrzeug einen Lokalcode generieren, der dann mit dem empfangenen Remotecode verglichen wird.

Durch die beschriebene Ausführungsform ist es möglich, dass ein Fahrer z.B. eine Gültigkeitsdauer des Remoteschlüssel als Schlüsselinformation an das Fahrzeug sendet. Das Fahrzeug kann überprüfen, ob ein generierter Lokalschlüssel, der zu der Gültigkeitsdauer korrespondiert mit dem Remoteschlüssel übereinstimmt. Es wird also eine einfache Möglichkeit geboten, die Gültigkeitsdauer eines Schlüssels dem Fahrzeug mitzuteilen.

Die Aufgabe wird ferner gelöst durch ein computerlesbares Speichermedium, welches Instruktionen enthält, die mindestens einen Prozessor dazu veranlassen, eines der oben beschriebenen Verfahren zu implementieren, wenn die Instruktionen durch mindestens einen Prozessor ausgeführt werden.

Es ergeben sich ähnliche oder identische Vorteile, wie sie bereits mit den oben stehenden Verfahren beschrieben wurden.

Die Aufgabe wird ferner gelöst durch ein System zur Öffnung und/oder Nutzung eines Fahrzeugs, umfassend:
- mindestens einen Server, der eine Datenbank umfasst und dazu ausgebildet ist, mindestens eine Identifikationskennung von mindestens einem mobilen Endgerät zu empfangen, wobei der Server dazu ausgebildet ist, unter Verwendung der Datenbank und der Identifikationskennung ein Zielfahrzeug zu bestimmen;
- ein Fahrzeug, Folgendes aufweisend:
   - eine Speichereinrichtung;
   - eine Fahrzeugkommunikationseinrichtung, die dazu ausgebildet ist, einen Schlüsseldatensatz und/oder einen basierend auf dem Schlüsseldatensatz generierten Code als Remotecode über eine Direktverbindung und/oder über ein Ad hoc-Netz zu empfangen;
   - eine Fahrzeugrecheneinheit, die dazu ausgebildet ist, einen Lokalcode zu generieren und die ferner dazu ausgebildet ist, den Remotecode mit dem Lokalcode zu vergleichen. Dabei ist die Fahrzeugrecheneinheit weiter dazu ausgebildet, das Fahrzeug zu öffnen und/oder freizugeben und/oder einen Fahrzeugbefehl auszuführen, wenn der Remotecode und der Lokalcode übereinstimmen.

In einer Ausführungsform können der Lokalcode und/oder der Remotecode durch ein Rolling-Code-Verfahren generiert werden, zum Beispiel durch den KeeLoq-Algorithmus oder den Dual KeeLoq-Algorithmus, und/oder basierend auf einem Rolling-Code-Verfahren generiert werden.

In einer Ausführungsform kann der Schlüsseldatensatz einen Seed-Schlüssel umfassen. Ferner kann das System ein mobiles Endgerät umfassen, wobei das mobile Endgerät umfassen kann:
- eine Endgeräte-Kommunikationseinrichtung, die dazu ausgebildet sein kann, einen Schlüsseldatensatz zu empfangen;
- eine Endgeräte-Recheneinheit, die dazu ausgebildet sein kann, den Remotecode unter Verwendung des Seed-Schlüssels, insbesondere mittels eines Pseudozufallszahlengenerators, zu generieren.

Es ergeben sich ähnliche oder identische Vorteile, wie sie bereits in Zusammenhang mit den vorstehend beschriebenen Verfahren beschrieben wurden.

Das beschriebene System ist kann dazu ausgebildet sein, die vorstehend beschriebenen Verfahren zu implementieren.

Weitere Ausführungsformen ergeben sich aus den Unteransprüchen.

Nachfolgend wird die Erfindung mittels mehrerer Ausführungsbeispiele beschrieben, die anhand von Abbildungen näher erläutert werden. Hierbei zeigen:
- Figur 1: eine schematische Ansicht des erfindungsgemäßen Systems;
- Figur 2: eine schematische Ansicht eines Fahrrads;
- Figur 3: eine schematische Ansicht eines mobilen Endgeräts;
- Figur 4: eine schematische Ansicht eines Servers;
- Figur 5: eine beispielhafte Datenbanktabelle;
- Figur 6: ein Flussdiagramm für ein Verfahren zum Öffnen eines Fahrzeugs;
- Figur 7: eine schematische Ansicht der Gültigkeitsdauer von Remotecodes;
- Figur 8: eine zeitliche Darstellung der Gültigkeitsdauer eines Remotecodes;
- Figur 9: eine Datenbanktabelle mit verschiedenen Seed-Schlüsseln;
- Figur 10: eine schematische Darstellung verschiedener Schlüsselsequenzen; und
- Figur 11: eine schematische Darstellung eines Fahrzeugs und eines mobilen Endgeräts ohne Internet-Verbindung.

Im Folgenden werden für gleiche oder gleich wirkende Teile dieselben Bezugsziffern verwendet.

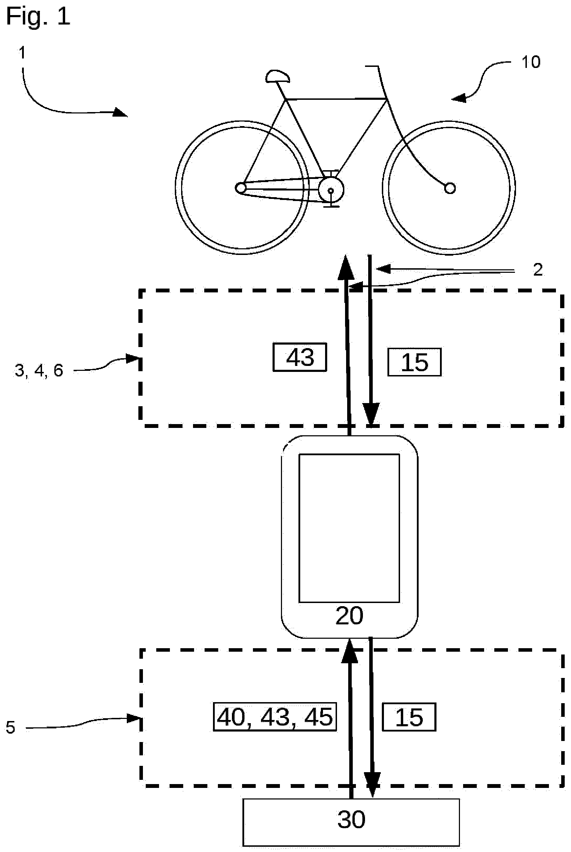

Figur 1 zeigt eine schematische Darstellung eines Systems 1 zum Öffnen eines Fahrzeugs 10 unter Verwendung eines mobilen Endgeräts 20. Das Fahrzeug 10 ist im beschriebenen Ausführungsbeispiel als ein Fahrrad 10 ausgebildet. Ferner verfügt das System 1 über ein mobiles Endgerät 20, welches im vorliegenden Ausführungsbeispiel als ein Smartphone 20 ausgebildet ist. Das Smartphone 20 ist über eine Mobilfunkverbindung 5 mit einem Server 30 verbunden.

Bei der Mobilfunkverbindung 5 kann es sich um eine Mobilfunkverbindung nach dem LTE-, UMTS- oder GSM-Standard handeln. Ferner kann es sich bei der Verbindung 5 auch um jede weitere denkbare Internet-Verbindung handeln. Die Verbindung 5 kann drahtlos oder drahtgebunden ausgebildet sein.

Zum Öffnen des Fahrrads 10 fordert das Smartphone 20 von dem Fahrrad 10 eine Identifikationskennung 15 an. Diese wird in dem beschriebenen Ausführungsbeispiel über eine Direktverbindung 2 übertragen. Dabei handelt es sich im vorliegenden Beispiel um eine Bluetooth-Verbindung. Das Smartphone 20 befindet sich daher zur Abfrage der Identifkationskennung innerhalb eines Empfangsradius des Fahrrads 10, da sonst keine Bluetooth-Verbindung 6 hergestellt werden könnte.

In anderen Ausführungsbeispielen kann es sich bei der Direktverbindung 2 auch um eine WLAN-Verbindung 4 oder um ein Ad hoc-Netz 3 handeln.

Die Identifikationskennung 15 stellt eine eindeutige Identifikation des Fahrrads 10 sicher. Die Identifikationskennung 15 kann daher eine Global Unique Identifier (GUID) sein. Es ist jedoch nicht notwendig, eine global eindeutige Kennzeichnung zu verwenden. Auch ein im beschriebenen System eindeutige Zahl ist möglich.

Das Smartphone 20 sendet die empfangene Identifikationskennung 15 an den Server 30 und fordert einen Remotecode 43 vom Server 30 an. Im vorliegenden Ausführungsbeispiel sendet das Smartphone 20 die Identifikationskennung 15 über eine LTE-Verbindung 5 an den Server 30.

Der Server 30 führt im Anschluss eine Datenbankabfrage aus, wobei unter Verwendung der empfangenen Identifikationskennung 15 ein Remotecode 43 generiert wird. Zu diesem Zweck hat der Server 30 in einer Datenbank zu jedem Fahrzeug einen Seed-Schlüssel gespeichert. Unter Verwendung eines Pseudozufallszahlengenerators generiert der Server 30 einen Remotecode 43, der nur durch das Fahrrad 10 verwendet werden kann.

Der Server 30 sendet den generierten Remotecode 43 an das Smart Phone 20.

In anderen Ausführungsbeispielen kann der Server 30 an Stelle des Remotecodes 43 einen Schlüsseldatensatz 40 an das Smart Phone 20 senden. Der Schlüsseldatensatz 40 kann dabei den Seed-Schlüssel umfassen. Das Smart Phone 20 kann also auch dazu benutzt werden, einen Remotecode 43 zu generieren.

In einem weiteren Ausführungsbeispiel sendet der Server 30 nicht nur einen Remotecode 43 an das mobile Endgerät 20, sondern eine Vielzahl von Remotecodes.

Die Kommunikation zwischen mobilem Endgerät 20 und Server 30 kann auch verschlüsselt ausgebildet sein, z.B. durch ein asymmetrisches Verschlüsselungsverfahren wie PGP. So können das mobile Endgerät 20 und der Server jeweils einen privaten Schlüssel speichern, wobei die Nachrichten zwischen mobilen Endgerät 20 und dem Server 30 durch einen öffentlichen Schlüssel verschlüsselt sind. Die privaten Schlüssel werden jeweils zum Entschlüsseln der Nachrichten verwendet.

Der übertragene Schlüsseldatensatz 40 kann also einen verschlüsselten Remotecode 43 umfassen.

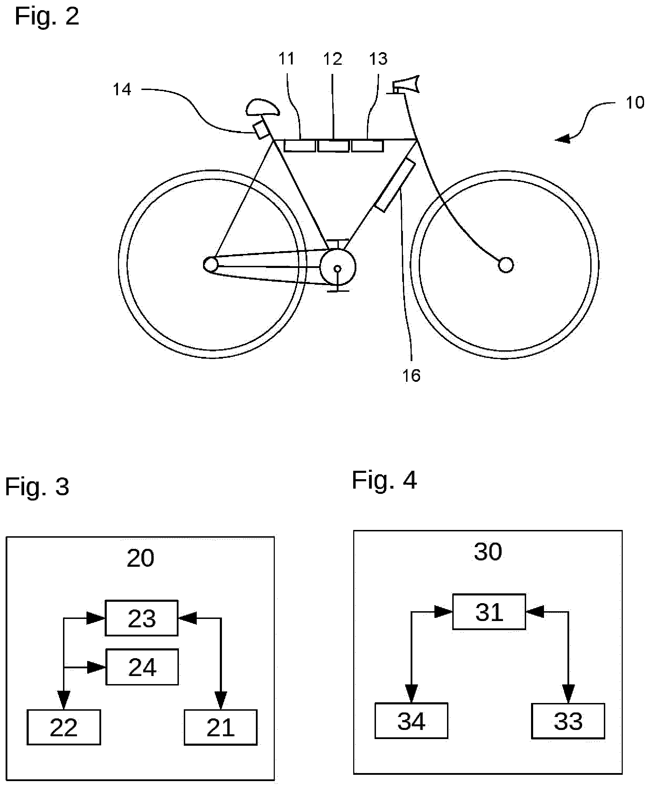

Das Smartphone 20 kann den empfangenen Remotecode 43 dazu verwenden, das Fahrrad 20 zu entsperren. Dazu sendet das Smartphone 20 den empfangenen Remotecode 43 über eine Bluetooth-Verbindung 6 an das Fahrrad 10. Wie in Figur 2 gezeigt, verfügt das Fahrrad 10 über eine Fahrzeug-Kommunikationseinrichtung 11, über die der Remotecode 43 empfangen werden kann.

Im aktuellen Ausführungsbeispiel ist die Fahrzeugkommunikationseinrichtung 11 als ein Bluetooth-Modul ausgebildet. Das Fahrrad 10 verfügt ferner über eine Speichereinrichtung 17, in die der Remotecode 43 nach Empfang durch die Fahrzeugkommunikationseinrichtung 11 geschrieben wird. Unter Verwendung eines Pseudozufallszahlengenerators 14 kann das Fahrrad 10 einen Lokalcode 42 generieren, der von einer Fahrzeugrecheneinheit 12 mit dem empfangenen Remotecode 43 verglichen wird. Stimmen Remotecode 43 und Lokalcode 42 überein, so wird das Fahrrad 10 entriegelt. Die Energieversorgung des Fahrrads 10 wird ferner über eine Batterie 16 sichergestellt.

Figur 3 zeigt eine schematische Darstellung eines mobilen Endgeräts 20. Das mobile Endgerät 20 umfasst eine Endgerätekommunikationseinrichtung 21, die im aktuellen Ausführungsbeispiel als Bluetooth-Kommunikationseinrichtung 21 ausgebildet ist. Die Endgerätekommunikationseinrichtung 21 steht in kommunikativer Verbindung mit einer Endgerätespeichereinrichtung 23. Das mobile Endgerät 20 verfügt ferner über eine Endgeräterecheneinheit 22, die in kommunikativer Verbindung mit der Endgerätespeichereinrichtung 23 steht.

In einem Ausführungsbeispiel kann das mobile Endgerät 20 auch über einen Pseudozufallszahlengenerator 24 verfügen. Unter Verwendung des Pseudozufallszahlengenerators 24 ist das mobile Endgerät in der Lage, selbständig Remotecodes 43 zu generieren.

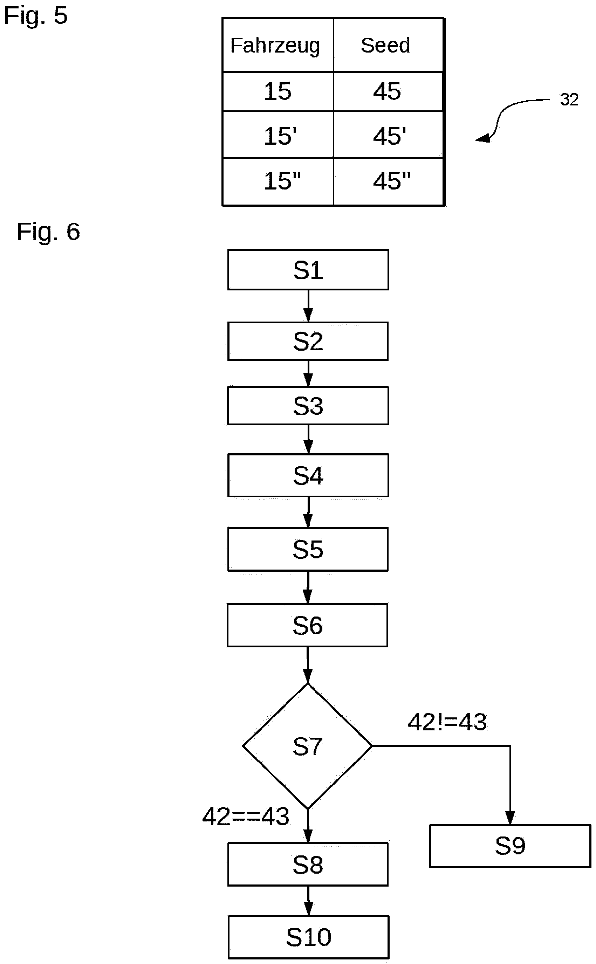

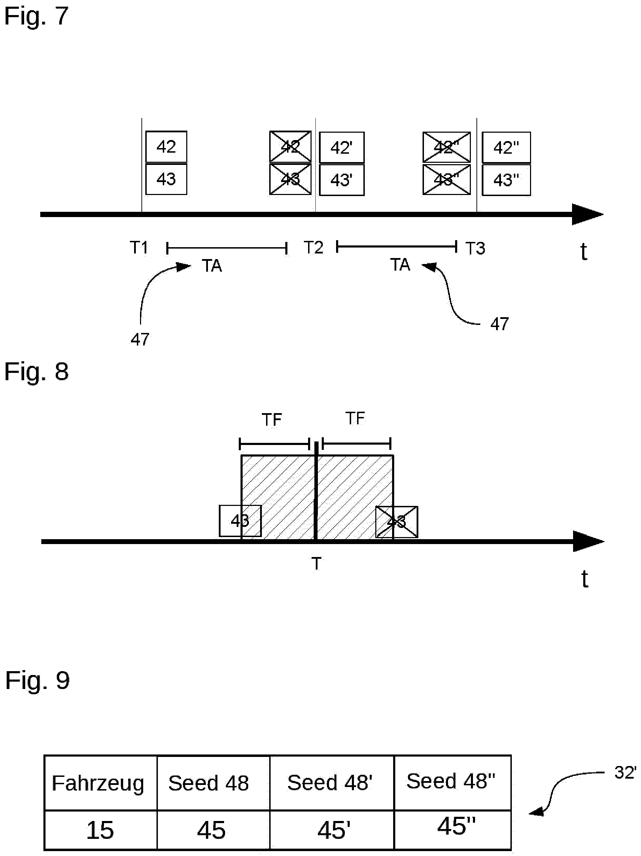

Figur 4 zeigt die schematische Darstellung eines Servers 30. Der Server 30 verfügt über eine Serverkommunikationseinrichtung 33, die im aktuellen Ausführungsbeispiel dazu ausgebildet ist, eine Internetverbindung bereitzustellen. Die Serverkommunikationseinrichtung 33 ist in kommunikativer Verbindung mit einer Serverspeichereinrichtung 31, in der eine Datenbank 32, 32' (sh. Figuren 5 und 9) abgespeichert ist. Der Server 30 verfügt ferner über eine Serverrecheneinheit 34. Auch der Server 30 ist in einem Ausführungsbeispiel dazu ausgebildet, Remotecodes 43 unter Verwendung eines Pseudozufallszahlengenerators zu generieren. In einem weiteren Ausführungsbeispiel kann jedoch auch eine große Anzahl von Remotecodes 43 in der Datenbank 32 gespeichert sein.

Figur 5 zeigt eine Datenbanktabelle der Datenbank 32, die auf dem Server 30 gespeichert ist. Die dargestellte Datenbanktabelle umfasst zwei Spalten, wobei in einer ersten Spalte Fahrzeugidentifikationsnummern 15, 15', 15" gespeichert sind. Jeder Fahrzeugidentifikation 15, 15', 15" wird ein Seed-Schlüssel 45, 45', 45" zugeordnet. Da jedem Fahrzeug eindeutig eine Fahrzeugidentifikationsnummer 15, 15', 15" zugeordnet ist, wird über die Datenbank 32 jedem Fahrzeug 10 ein entsprechender Seed-Schlüssel 45, 45', 45" zugewiesen.

Der Server 30 ermittelt in einem Ausführungsbeispiel nach Empfang einer Fahrzeugidentifikation 15, 15', 15" den zugehörigen Seed-Schlüssel 45, 45', 45". Unter Verwendung des ermittelten Seed-Schlüssels 45, 45', 45" generiert der Server 30 einen Remotecode 43, der über die Serverkommunikationseinrichtung 33 an das Smartphone 20 gesendet wird.

In anderen Ausführungsbeispielen übermittelt der Server 30 unmittelbar den ermittelten Seed-Schlüssel 45, 45', 45".

Figur 6 zeigt ein Flussdiagramm, welches die Schritte zum Öffnen eines Fahrzeugs 10 darstellt.

Im Schritt S1 empfängt ein mobiles Endgerät 20 eine Identifikationskennung 15 von einem Fahrzeug 10. Die Identifikationskennung 15 wird im Schritt S2 über ein Mobilfunknetzwerk 5 an den Server 30 übermittelt. Im Schritt S3 generiert der Server 30 einen Remotecode 43 und sendet den Remotecode 43 an das mobile Endgerät 20.

In einem weiteren Ausführungsbeispiel sendet der Server 30 einen Seed-Schlüssel 45 an das mobile Endgerät. In noch einem weiteren Ausführungsbeispiel sendet der Server 30 eine Vielzahl an Remotecodes 43 an das mobile Endgerät 20.

Nach dem Empfang des Remotecodes 43 von dem Server 30 auf dem mobilen Endgerät 20 übermittelt das mobile Endgerät 20 im Schritt S4 den Remotecode 43 an das Fahrzeug 10. Das Übermitteln wird im vorliegenden Ausführungsbeispiel über ein WLAN ausgeführt.

Im Schritt S5 empfängt das Fahrzeug 10 den Remotecode 43 und generiert im Schritt S6 einen Lokalcode 42. Im Schritt S7 werden der generierte Lokalcode 42 und der empfangene Remotecode 43 miteinander verglichen. Wenn die beiden Codes nicht übereinstimmen, so wird im Schritt S9 eine Fehlermeldung an das mobile Endgerät 20 übermittelt. In einem weiteren Ausführungsbeispiel kann im Schritt S9 ein Zähler erhöht werden, so dass nach einer Anzahl von Versuchen, vorzugsweise drei Versuchen, das Fahrzeug permanent gesperrt wird.

Stimmen der generierte Lokalcode 42 und der empfangene Remotecode 43 überein, so wird im Schritt S8 das Fahrzeug 10 geöffnet. Beim Öffnen kann in einem Ausführungsbeispiel eine Steuerelektronik eingesetzt werden, um einen Stellmotor anzusteuern, der ein Schloss öffnet. Alternativ kann auch ein Magnetschloss eingesetzt werden.

In einem weiteren Ausführungsbeispiel kann im Schritt S8 ein beliebiger Fahrzeugbefehl ausgeführt werden, der zusammen mit dem Remotecode 43 im Schritt S4 an das Fahrzeug 10 übermittelt wurde.

Im anschließenden Schritt S10 wird der empfangene Remotecode (optional) als ungültig markiert. Das bedeutet, dass bei einem erneuten Empfang desselben Remotecodes 43 dieser nicht mehr funktioniert. Wird ein Rolling-Code-Verfahren verwendet, so wird nicht nur der aktuelle Remotecode 43 ungültig, sondern es werden auch alle zeitlich davor liegenden Remotecodes als ungültig markiert.

Figur 7 zeigt schematisch das Generieren von Lokalcodes 42, 42', 42" und Remotecodes 43, 43', 43" in einem Ausführungsbeispiel, in dem synchronisierte Zeitgeber 13, 24 verwendet werden, um in kontinuierlichen Zeitabständen Remote- bzw. Lokalcodes zu generieren. Im aktuellen Ausführungsbeispiel umfassen das Fahrzeug 10 und das mobile Endgerät 20 Zeitgeber 13, 24, die synchronisiert sind. Zu einem ersten Zeitpunkt T1 wird auf dem mobilen Endgerät 20 ein Remotecode 43 generiert und auf dem Fahrzeug 10 ein Lokalcode 42. Nach Ablauf einer Gültigkeitsdauer 47 werden der Lokalcode 42 und der Remotecode 43 als ungültig markiert. Anschließend wird zum Zeitpunkt T2 ein neuer Lokalcode 42 und ein neuer Remotecode 43 generiert. Diese werden wieder nach Ablauf der Gültigkeitsdauer 47 als ungültig markiert, worauf im Anschluss ein neuer Lokalcode 42" und ein neuer Remotecode 43" generiert werden.

Dadurch, dass die Remote- und Lokalcodes jeweils als ungültig markiert werden, ist es unbedingt notwendig, dass die verwendeten Zeitgeber 13, 24 synchronisiert werden. Die Synchronisation der Zeitgeber 13, 24 kann entweder durch ein entsprechendes Protokoll während des Betriebs durchgeführt werden oder bei Auslieferung der einzelnen Komponenten.

Figur 8 zeigt ein Ausführungsbeispiel, bei dem ein erzeugter Remotecode 43 in einem Zeitfenster TF um einen Zeitpunkt T gültig ist. Es ist also möglich, dass für einen Remotecode 43 ein Zeitpunkt T definiert wird, an dem der Remotecode 43 gültig sein soll. Ferner ist es möglich, ein Zeitfenster TF zu definieren, zum Beispiel 5 Minuten, welches als Puffer oder auch Ausleihdauer dient. Der Remotecode 43 kann dann nur im Zeitraum T-TF und T+TF zum Öffnen eines Fahrzeugs 10 verwendet werden. Zeitpunkt T und Zeitdauer TF können als Information mit dem Remotecode 43 von dem mobilen Endgerät 20 an das Fahrzeug 10 übermittelt werden.

Figur 9 zeigt eine Tabelle einer Datenbank 32', in der einem Fahrzeug 10 eine Vielzahl von Seed-Schlüsseln 45, 45', 45" unterschiedlichen Typs zugeordnet wird. Eine Identifikationskennung 15 wird im gezeigten Beispiel drei Seed-Schlüsseln 45, 45', 45" zugeordnet. Ein Seed-Schlüsseltyp 48, 48', 48" gibt die Gültigkeitsdauer der unter Verwendung der Seed-Schlüssel 45, 45', 45" erzeugten Remotecodes 43 an.

Zum Beispiel kann der Schlüsseltyp 48 angeben, dass die Remotecodes 43, die unter Verwendung des Seed-Schlüssels 45 generiert werden, eine Gültigkeit von 30 Minuten haben. Erzeugte Remotecodes des Schlüsseltyps 48' können eine Gültigkeit von 60 Minuten haben und Remotecodes des Schlüsseltyps 48" eine Gültigkeit von 3 Stunden. Das mobile Endgerät 20 generiert auf Grundlage des vom Server 30 empfangenen Seed-Schlüssels 45, 45', 45" einen Remotecode 43.

Der Remotecode 43 wird an das Fahrzeug 10 gesandt. Damit das Fahrzeug 10 bestimmen kann, von welchem Typ 48, 48', 48" der Remotecode 43 ist, verfügt das Fahrzeug 10 über dieselben Seed-Schlüssel 45, 45', 45" wie der Server 30. Das Fahrzeug 10 generiert nun für alle Seed-Schlüssel 45, 45', 45" Lokalcodes K1 bis K6 und vergleicht den empfangenen Remotecode 43 mit sämtlichen erzeugten Lokalcodes K1 bis K6. Je nachdem welcher Lokalcode K1 bis K6 mit dem empfangenen Remotecode 43 übereinstimmt, kann das Fahrzeug bestimmen, durch welchen Seed-Schlüssel 45, 45', 45" der Lokalcode K1 bis K6 generiert wurde. Daher lässt sich durch den Vergleich feststellen, von welchem Schlüsseltyp 48, 48', 48" der empfangene Remotecode 43 ist.

Wird zum Beispiel festgestellt, dass der empfangene Remotecode 43 vom Typ 48' ist, so wird das Fahrzeug 10 für 60 Minuten freigeschaltet.

In einem Ausführungsbeispiel sendet des mobile Endgerät 20 den Schlüsseltyp 48, 48', 48" als Information an das Fahrzeug 10 zusammen mit dem Remotecode 43. Das Fahrzeug 10 kann dann unter Verwendung des empfangenen Schlüsseltyp 48, 48', 48" feststellen, welchen Seed-Schlüssel 45, 45', 45" es verwenden muss, um einen Lokalcode 45 zu generieren.

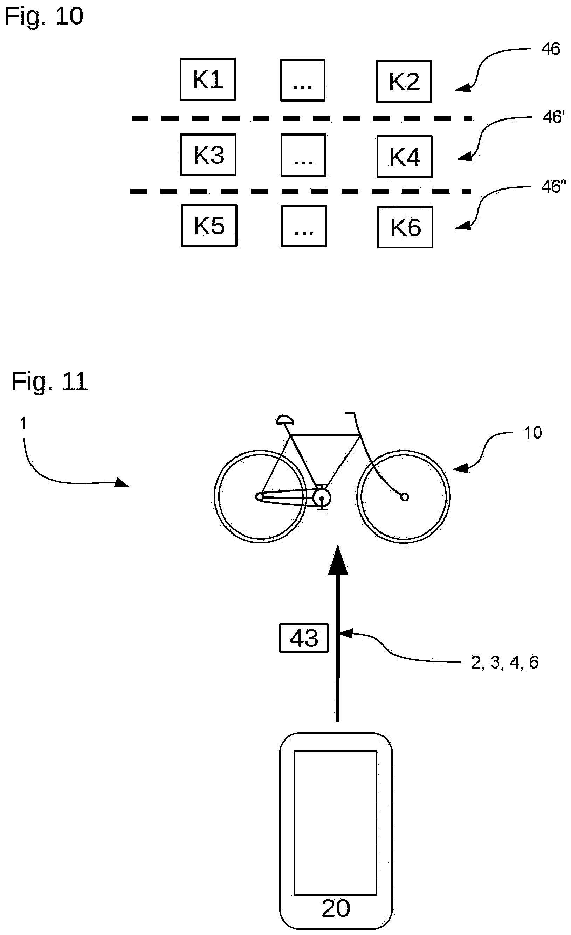

Figur 10 zeigt verschiedene Schlüsselsequenzen 46, 46' 46", die auf dem Fahrzeug 10 generiert wurden. Jeder Schlüsselsequenz 46, 46' 46" ist ein Seed-Schlüssel 45, 45', 45", die jeweils einem anderen Schlüsseltyp 48, 48', 48" zugeordnet sind.

Figur 11 zeigt, wie ein Smartphone 20 ohne eine bestehende Internetverbindung zu einem Server 30 ein Fahrrad 10 öffnen kann. Auf dem Smartphone 20 ist ein Remotecode 43 gespeichert. Der Remotecode 43 kann nun mittels einer Bluetooth-Verbindung 6, einer WLAN-Verbindung oder über ein Ad hoc-Netz 3 an das Fahrrad 10 übermittelt werden. Das Fahrrad 10 vergleicht den empfangenen Remotecode 43 mit einem generierten Lokalcode 42 und gibt das Fahrrad 10 entsprechend frei.

Dem Fachmann ergibt sich, dass die vorstehend beschriebenen Ausführungsbeispiele und Ausführungsformen lediglich beispielhaften Charakter haben .

### Bezugszeichenliste:

- 1: System
- 2: Direktverbindung
- 3: Ad-Hoc-Netz
- 4: WLAN
- 5: Mobilfunknetzwerk
- 6: Bluetoothverbindung
- 10, 10', 10": Fahrzeug, Zielfahrzeug, Fahrrad
- 11: Fahrzeug-Kommunikationseinrichtung
- 12: Fahrzeug-Recheneinheit
- 13, 24: Zeitgeber
- 14, 24: Pseudozufallszahlengenerator
- 15, 15', 15": Identifikationskennung
- 16: Batterie, Energieversorgung
- 17, 31: Speichereinrichtung
- 20: mobiles Endgerät, Smartphone
- 21: Endgeräte-Kommunikationseinrichtung
- 22: Endgeräte-Recheneinheit
- 23: Endgeräte-Speichereinrichtung
- 30: Server
- 32, 32': Datenbank
- 33: Server-Kommunikationseinrichtung
- 34: Server-Recheneinheit
- 40: Schlüsseldatensatz
- 41: Code
- 42, 42', 42": Lokalcode
- 43, 43', 43": Remotecode
- K1, K2: Schlüssel vom Typ 48
- K3, K4: Schlüssel vom Typ 48'
- K5, K6: Schlüssel vom Typ 48"
- 45, 45', 45": Seed-Schlüssel
- 46, 46', 46": Schlüsselsequenz
- 47: Gültigkeitsdauer
- 48, 48', 48": Schlüsseltyp
- 50: Befehlsdatensatz
- 51: Fahrzeugbefehl
- TS: Zeitspanne
- TA: Zeitabstände
- T, T1, T2,: T3Zeitpunkt
- TF: Zeitfenster
- S1, S2, S3, S4, S5, S6, S7, S8, S9, S10: Schritt

## Patentansprüche

1. Verfahren zum Öffnen und/oder zur Nutzung mindestens eines Fahrzeugs (10), umfassend die Schritte:
a) Empfang, durch ein mobiles Endgerät (20), insbesondere ein Smartphone (20), einer Identifikationskennung (15), die einem Zielfahrzeug (10) zugeordnet ist;
b) Übermittlung der Identifikationskennung (15), insbesondere über ein Mobilfunknetzwerk (5), an einen Server (30);
c) Empfangen eines Schlüsseldatensatzes (40) von dem Server (30), insbesondere von einem mobilen Endgerät (20);
d) Übermitteln des Schlüsseldatensatzes (40) und/oder einen basierend auf dem Schlüsseldatensatz (40) generierten Code (41) als Remotecode (43) an das Zielfahrzeug (20), insbesondere über eine Direktverbindung (2) und/oder ein Ad-Hoc-Netz (3) zwischen dem Zielfahrzeug (10) und dem mobilen Endgerät (20);
e) Empfangen des Remotecodes (43) durch das Zielfahrzeug (10);
f) Generierung mindestens eines Lokalcodes (42) durch das Zielfahrzeug (10);
g) Vergleich des Remotecodes (43) mit dem mindestens einen Lokalcode (42) durch das Zielfahrzeug (10);
h) Öffnen und/oder Freigeben des Zielfahrzeuges (10) und/oder ausführen eines Fahrzeugbefehls (51) auf dem Zielfahrzeug (10), wenn mindestens einer der Lokalcodes (42) mit dem Remotecode () übereinstimmt
**dadurch gekennzeichnet, dass**
der Schlüsseldatensatz (40) einen Seed-Schlüssel (45, 45', 45") umfasst, wobei der Schlüsseldatensatz (40) von dem mobilen Endgerät (20) empfangen wird und das mobile Endgerät (20) den Remotecode (43 ,43', 43") unter Verwendung des Seed-Schlüssels (45, 45', 45") mittels eines Pseudozufallszahlengenerators (14) generiert.

2. Verfahren nach Anspruch 1,
**dadurch gekennzeichnet, dass**
der Lokalcode (42 ,42', 42") und/oder der Remotecode (43, 43', 42") durch ein Rollingcodeverfahren generiert werden, z.B. durch den KeeLoq Algorithmus oder den Dual KeeLoq Algorithmus, und/oder basierend auf einem Rollingcodeverfahren generiert werden.

3. Verfahren nach einem der vorhergehenden Ansprüche,
**dadurch gekennzeichnet, dass**
ein erster und mehrere weitere Lokalcodes (42, 42', 42") generiert werden und ein Öffnen und/oder Freigeben des Zielfahrzeugs (10) nur dann nicht erfolgt, wenn keiner der Lokalcodes (42, 42', 42") mit dem Remotecode (43, 43', 43") übereinstimmt.

4. Verfahren nach einem der vorhergehenden Ansprüche,
**dadurch gekennzeichnet, dass**
der Remotecode (43, 43', 43") nach einmaliger Verwendung durch das Zielfahrzeug (10) seine Gültigkeit verliert
und/oder
nach einer definierten Zeitspanne (TA), insbesondere kleiner 5 oder 10 Minuten, bevorzugt kleiner 1 Minute, weiter bevorzugt kleiner 10 Sekunden, seine Gültigkeit verliert,
und/oder
der Remotecode (43, 43', 43") nur innerhalb eines vorgegebenen Zeitfensters (TF) zum Öffnen und/oder Freigeben des Zielfahrzeugs verwendbar ist.

5. Verfahren nach einem der vorhergehenden Ansprüche, insbesondere nach Anspruch 4,
**dadurch gekennzeichnet, dass**
das Zielfahrzeug (10) und der Server (30) oder das mobile Endgerät (20) und der Server (30), vorzugsweise jeweils miteinander synchronisierte, Zeitgeber (14) aufweisen, wobei ein Remotecode (43, 43', 43") und ein Lokalcode (42, 42', 42") jeweils kontinuierlich in gleichen Zeitabständen (TA), insbesondere alle 5 Minuten, bevorzugt jede Minute, generiert werden.

6. Verfahren nach einem der vorhergehenden Ansprüche,
**dadurch gekennzeichnet, dass**
das Verfahren ferner umfasst:
- Senden eines Befehlsdatensatzes (50) von dem mobilen Endgerät (20) zu dem Zielfahrzeug (10), wobei der Befehlsdatensatz (50) mindestens einen Fahrzeugbefehl (51) umfasst;
- Empfangen des Befehlsdatensatzes (50) durch das Zielfahrzeug (10); und
- Ausführen des mindestens einen Fahrzeugbefehls (51), wenn der Lokalcode (42, 42', 42") mit dem Remotecode (43, 43', 43") übereinstimmt.

7. Verfahren nach einem der vorhergehenden Ansprüche,
**dadurch gekennzeichnet, dass**
die Direktverbindung (2) als eine Bluetoothverbindung, eine Infrarotverbindung oder eine WLAN-Verbindung ausgebildet ist.

8. Verfahren nach einem der vorhergehenden Ansprüche,
**dadurch gekennzeichnet, dass**
der Schritt d) das Übermitteln einer Angabe hinsichtlich eines Zeitpunkts (T) oder Zeitfensters (TF) und/oder der Schritt c) das Empfangen einer Angabe hinsichtlich eines Zeitpunkts (T) bzw. Zeitfensters (TF) umfasst, wobei der generierte Remotecode (43, 43', 43") zu dem Zeitpunkt (T) bzw. Zeitfenster (TF) gültig ist.

9. Verfahren nach einem der vorhergehenden Ansprüche, insbesondere nach Anspruch 6,
**dadurch gekennzeichnet, dass**
der Remotecode (43, 43', 43") innerhalb eines/des Zeitfensters (TF), insbesondere 60 oder 30 oder 5 Minuten, bevorzugt 1 Minute, gültig ist.

10. Verfahren nach einem der vorhergehenden Ansprüche, wobei das Fahrzeug (10) erste und zweite Schlüsseldaten zur Generierung einer ersten Schlüsselsequenz bzw. zweiten Schlüsselsequenz aufweist,
**dadurch gekennzeichnet, dass**
das Verfahren weiter umfasst:
- Empfangen einer Schlüsselinformation, insbesondere von dem mobilen Endgerät (20) auf dem Fahrzeug (10);
- Auswählen der ersten oder zweiten Schlüsseldaten unter Verwendung der Schlüsselinformationen;
- Generieren mindestens eines Lokalcodes (45) unter Verwendung der ausgewählten Schlüsseldaten;
- Vergleichen des mindestens einen generierten Lokalcodes (45) mit dem empfangenen Remotecode (43);
- Öffnen und/oder Freigeben und/oder Ausführen eines Fahrzeugbefehls, wenn der Remotecode (43) mit dem mindestens einen generierten Lokalcode (45) der ausgewählten Schlüsseldaten übereinstimmt.

11. Computer-lesbares Speichermedium, welches Instruktionen enthält, die mindestens einen Prozessor dazu veranlassen, ein Verfahren nach einem der vorhergehenden Ansprüche zu implementieren, wenn die Instruktionen durch mindestens einen Prozessor ausgeführt werden.

12. System (1) zur Öffnung und/oder Nutzung eines Fahrzeugs (10), umfassend:
- mindestens einen Server (30), der eine Datenbank (32, 32') umfasst und dazu ausgebildet ist, mindestens eine Identifikationskennung (15) von mindestens einem mobilen Endgerät (20), z.B. einem Smartphone (20), zu empfangen, wobei der Server (30) dazu ausgebildet ist, unter Verwendung der Datenbank (32, 32') und der Identifikationskennung (15) ein Zielfahrzeug (10) zu bestimmen;
- ein Fahrzeug (10), insbesondere Fahrrad (10), Folgendes aufweisend:
∘ eine Speichereinrichtung (17);
∘ eine Fahrzeug-Kommunikationseinrichtung (11), die dazu ausgebildet ist, einen basierend auf dem Schlüsseldatensatz (40) generierten Code (41) als Remotecode (43, 43', 43") über eine Direktverbindung (2) und/oder über ein Ad-Hoc-Netz (3) zu empfangen;
∘ eine Fahrzeug-Recheneinheit (12), die dazu ausgebildet ist, einen Lokalcode (42, 42', 42") zu generieren und die ferner dazu ausgebildet ist, den Remotecode (43, 43', 43") mit dem Lokalcode (42, 42', 42") zu vergleichen;
**dadurch gekennzeichnet, dass**
die Fahrzeug-Recheneinheit (12) weiter dazu ausgebildet ist, das Fahrzeug (10) zu öffnen und/oder freizugeben und/oder einen Fahrzeugbefehl (51) auszuführen, wenn der Remotecode (43, 43' 43") und der Lokalcode (42, 42', 42") übereinstimmen.

13. System (1) nach Anspruch 12,
**dadurch gekennzeichnet, dass**
der Lokalcode (42, 42', 42") und/oder der Remotecode (43, 43' 43") durch ein Rollingcodeverfahren generiert werden, z.B. durch den KeeLoq Algorithmus oder den Dual KeeLoq Algorithmus, und/oder basierend auf einem Rollingcodeverfahren generiert werden.

14. System (1) nach einem der Ansprüche 12 oder 13,
**dadurch gekennzeichnet, dass**
der Schlüsseldatensatz (40) einen Seed-Schlüssel (45, 45' 45") umfasst und das System (1) ferner ein mobiles Endgerät (20) umfasst, wobei das mobile Endgerät (20) umfasst:
- eine Endgeräte-Kommunikationseinrichtung (21), die dazu ausgebildet ist, einen Schlüsseldatensatz (40) zu empfangen;
- eine Endgeräte-Recheneinheit (22), die dazu ausgebildet ist, den Remotecode (43, 43', 43") unter Verwendung des Seed-Schlüssels (45, 45', 45"), insbesondere mittels eines Pseudozufallszahlengenerators (24), zu generieren.

## Claims

1. A method for opening and/or using at least one vehicle (10), comprising the steps of:
a) receiving, by a mobile terminal (20), in particular a smart phone (20), an identification identifier (15) assigned to a target vehicle (10);
b) transmitting the identification identifier (15), in particular over a mobile radio network (5), to a server (30);
c) receiving a key data set (40) from the server (30), in particular from a mobile terminal (20);
d) transmitting the key data set (40) and/or a code (41) generated based on the key data set (40) as a remote code (43) to the target vehicle (20), in particular over a direct connection (2) and/or an ad hoc network (3) between the target vehicle (10) and the mobile terminal (20);
e) receiving the remote code (43) by the target vehicle (10);
f) generating at least one local code (42) by the target vehicle (10);
g) comparing the remote code (43) with the at least one local code (42) by the target vehicle (10);
h) opening and/or enabling the target vehicle (10) and/or executing a vehicle command (51) on the target vehicle (10), when at least one of the local codes (42) complies with the remote code (43),
**characterized in that**
the key data set (40) comprises a seed key (45, 45', 45"), wherein the key data set (40) is received from the mobile terminal (20), and the mobile terminal (20) generates the remote code (43, 43', 43") while using the seed key (45, 45', 45") by means of a pseudo random number generator (14).

2. The method according to claim 1,
**characterized in that**
the local code (42, 42', 42") and/or the remote code (43, 43', 43") are generated by a rolling code process, e.g. by the KeeLoq algorithm or the Dual KeeLoq algorithm and/or based on a rolling code process.

3. The method according to any one of the preceding claims,
**characterized in that**
a first and several further local codes (42, 42', 42") are generated, and opening and/or enabling the vehicle (10) is not performed only then when none of the local codes (42, 42', 42") complies with the remote code (43, 43', 43").

4. The method according to any one of the preceding claims,
**characterized in that**
the remote code (43, 43', 43") loses its validity after being used once by the target vehicle (10),
and/or
loses its validity after a defined period of time (TA), in particular of less than 5 or 10 minutes, preferably less than 1 minute, further preferred less than 10 seconds,
and/or
the remote code (43, 43', 43") is only usable within a given time window (TF) for opening and/or enabling the target vehicle.

5. The method according to any one of the preceding claims, in particular according to claim 4,
**characterized in that**
the target vehicle (10) and the server (30) or the mobile terminal (20) and the server (30) include timers (14) each being preferably synchronized to one another, wherein a remote code (43, 43', 43") and a local code (42, 42', 42") are generated in each case continuously at equal time intervals (TA), in particular every 5 minutes, preferably every minute.

6. The method according to any one of the preceding claims,
**characterized in that**
the method further comprises:
- sending a command data set (50) from the mobile terminal (20) to the target vehicle (10), wherein the command data set (50) comprises at least one vehicle command (51);
- receiving the command data set (50) by the target vehicle (10); and
- executing the at least one vehicle command (51), when the local code (42, 42', 42") complies with the remote coder (43, 43', 43").

7. The method according to any one of the preceding claims,
**characterized in that**
the direct connection (2) is designed as a Bluetooth connection, an infrared connection or a WLAN connection.

8. The method according to any one of the preceding claims,
**characterized in that**
step d) comprises transmitting an indication with respect to a point of time (T) or time window (TF) and/or step c) comprises receiving an indication with respect to a point of time (T) or time window (TF), wherein the generated remote code (43, 43', 43") is valid at the point of time (T) or within the time window (TF).

9. The method according to any one of the preceding claims, in particular according to claim 6,
**characterized in that**
the remote code (43, 43', 43") is valid within a/the time window (TF), in particular for 60 or 30 or 5 minutes, preferably 1 minute.

10. The method according to any one of the preceding claims, wherein the vehicle (10) includes first and second key data for generating a first key sequence or a second key sequence,
**characterized in that**
the method further comprises:
- receiving key information, in particular from the mobile terminal (20) on the vehicle (10);
- selecting the first or second key data while using the key information;
- generating at least one local code (45) while using the selected key data;
- comparing the at least one generated local code (45) with the received remote code (43);
- opening and/or enabling and/or executing a vehicle command, when the remote code (43) complies with the at least one generated local code (45) of the selected key data.

11. A computer-readable storage medium containing instructions which cause at least one processor to implement a method according to any one of the preceding claims when the instructions are executed by at least one processor.

12. A system (1) for opening and/or using a vehicle (10), comprising:
- at least one server (30) comprising a data base (32, 32') and designed to receive at least ode identification identifier (15) from at least one mobile terminal (20), e.g. a smart phone (20), wherein the server (30) is designed to determine a target vehicle (10) while using the data base (32, 32') and the identification identifier (15);
- a vehicle (10), in particular a bicycle (10), including the following:
∘ a storage device (17);
∘ a vehicle communication device (11) designed to receive a code (41) generated based on the key data set (40) as a remote code (43, 43', 43") via a direct connection (2) and/or via an ad hoc network (3);
∘ a vehicle computing unit (12) designed to generate a local code (42, 42', 42") and further designed to compare the remote code (43, 43', 43") with the local code (42, 42', 42");
**characterized in that**
the vehicle computing unit (12) is further designed to open and/or enable the vehicle (10) and/or to execute a vehicle command (51), when the remote code (43, 43', 43") and the local code (42, 42', 42") comply.

13. The system (1) according to claim 12,
**characterized in that**
the local code (42, 42', 42") and/or the remote code (43, 43', 43") are generated by a rolling code process, e.g. by the KeeLoq algorithm or the Dual KeeLoq algorithm and/or based on a rolling code process.

14. The system according to any one of claims 12 or 13,
**characterized in that**
the key data set (40) comprises a seed key (45, 45' 45"), and the system (1) further comprises a mobile terminal (20), wherein the mobile terminal (20) comprises:
- a terminal communication device (21) designed to receive a key data set (40);
- a terminal computing unit (22) designed to generate the remote code (43, 43', 43") while using the seed key (45, 45', 45"), in particular by means of a pseudo random number generator (24).

## Revendications

1. Procédé permettant d'ouvrir et/ou d'utiliser au moins un véhicule (10), comprenant les étapes :
a) réception, par un terminal mobile (20), en particulier un Smartphone (20), d'un identifiant (15) qui est attribué à un véhicule cible (10) ;
b) transmission de l'identifiant (15), en particulier via un réseau radio mobile (5), à un serveur (30) ;
c) réception d'un jeu de données de clé (40) depuis le serveur (30), en particulier depuis un terminal mobile (20) ;
(d) transmission du jeu de données de clé (40) et/ou d'un code (41) généré sur la base du jeu de données de clé (40) comme code distant (43) au véhicule cible (20), en particulier via une connexion directe (2) et/ou un réseau Ad-Hoc (3) entre le véhicule cible (10) et le terminal mobile (20) ;
e) réception du code distant (43) par le véhicule cible (10) ;
f) génération d'au moins un code local (42) par le véhicule cible (10) ;
g) comparaison du code distant (43) avec l'au moins un code local (42) par le véhicule cible (10) ;
h) ouverture et/ou libération du véhicule cible (10) et/ou exécution d'un ordre de véhicule (51) sur le véhicule cible (10) lorsqu'au moins un des codes locaux (42) concorde avec le code distant (43) ;
**caractérisé en ce que**
le jeu de données de clé (40) comprend une clé de diversification (45, 45', 45"), sachant que le jeu de données de clé (40) est reçu depuis le terminal mobile (20) et le terminal mobile (20) génère le code distant (43, 43', 43") en utilisant la clé de diversification (45, 45', 45") moyennant un générateur de nombres pseudo-aléatoires (14).

2. Procédé selon la revendication 1,
**caractérisé en ce que**
le code local (42, 42', 42") et/ou le code distant (43, 43', 43") sont générés par un procédé à code tournant, par ex. par l'algorithme KeeLoq ou l'algorithme Dual KeeLoq, et/ou sont générés sur la base d'un procédé à code tournant.

3. Procédé selon l'une des revendications précédentes,
**caractérisé en ce que**
un premier et plusieurs codes locaux (42, 42', 42") supplémentaires sont générés et une ouverture et/ou une libération du véhicule cible (10) ne sont pas effectuées que lorsqu'aucun des codes locaux (42, 42', 42") ne concorde avec le code distant (43, 43', 43").

4. Procédé selon l'une des revendications précédentes,
**caractérisé en ce que**
le code distant (43, 43', 43") perd sa validité après utilisation unique par le véhicule cible (10)
et/ou
perd sa validité après une plage de temps (TA) définie, en particulier inférieure à 5 ou 10 minutes, de préférence inférieure à 1 minute, de manière plus préférentielle inférieure à 10 secondes,
et/ou
le code distant (43, 43', 43") n'est utilisable pour ouvrir et/ou libérer le véhicule cible que pendant un créneau de temps (TF) spécifié.

5. Procédé selon l'une des revendications précédentes, en particulier selon la revendication 4,
**caractérisé en ce que**
le véhicule cible (10) et le serveur (30) ou le terminal mobile (20) et le serveur (30) présentent des minuteries (14), de préférence synchronisées l'une avec l'autre respectivement, sachant qu'un code distant (43, 43', 43") et un code local (42, 42', 42") sont générés respectivement de manière continue à intervalles de temps égaux (TA), en particulier toutes les 5 minutes, de préférence à chaque minute.

6. Procédé selon l'une des revendications précédentes,
**caractérisé en ce que**
le procédé comprend en outre :
∘ l'envoi d'un jeu de données d'ordre (50) depuis le terminal mobile (20) au véhicule cible (10), sachant que le jeu de données d'ordre (50) comprend au moins un ordre de véhicule (51) ;
∘ la réception du jeu de données d'ordre (50) par le véhicule cible (10) ; et
∘ l'exécution de l'au moins un ordre de véhicule (51) lorsque le code local (42, 42', 42") concorde avec le code distant (43, 43', 43").

7. Procédé selon l'une des revendications précédentes,
**caractérisé en ce que**
la connexion directe (2) est constituée comme connexion Bluetooth, connexion infrarouge ou connexion WLAN.

8. Procédé selon l'une des revendications précédentes,
**caractérisé en ce que**
l'étape d) comprend la transmission d'une indication relative à un moment (T) ou à un créneau de temps (TF) et l'étape c) comprend la réception d'une indication relative à un moment (T) ou un créneau de temps (TF), sachant que le code distant (43, 43', 43") généré est valable au moment (T) ou au créneau de temps (TF).

9. Procédé selon l'une des revendications précédentes, en particulier selon la revendication 6,
**caractérisé en ce que**
le code distant (43, 43', 43") est valable pendant un/le créneau de temps (TF), en particulier 60 ou 30 ou 5 minutes, de préférence 1 minute.

10. Procédé selon l'une des revendications précédentes, sachant que le véhicule (10) comprend des premières et des deuxièmes données de clé permettant de générer une première séquence de clé et respectivement une deuxième séquence de clé,
**caractérisé en ce que**
le procédé comprend en outre
- la réception d'une information de clé, en particulier depuis le terminal mobile (20) sur le véhicule (10) ;
- la sélection des premières ou deuxièmes données de clé en utilisant les informations de clé ;
- la génération d'au moins un code local (45) en utilisant les données de clé sélectionnées ;
- la comparaison de l'au moins un code local (45) généré avec le code distant (43) reçu ;
- l'ouverture et/ou la libération et/ou l'exécution d'un ordre de véhicule lorsque le code distant (43) concorde avec l'au moins un code local (45) généré des données de clé sélectionnées.

11. Support de mémoire lisible par ordinateur, lequel contient des instructions qui font implémenter à au moins un processeur un procédé selon l'une des revendications précédentes lorsque les instructions sont exécutées par au moins un processeur.

12. Système (1) permettant d'ouvrir et/ou d'utiliser un véhicule (10), comprenant :
- au moins un serveur (30) qui comprend une base de données (32, 32') et est constitué pour recevoir au moins un identifiant (15) depuis au moins un terminal mobile (20), par ex. un Smartphone (20), sachant que le serveur (30) est constitué pour déterminer un véhicule cible (10) en utilisant la base de données (32, 32') et l'identifiant (15) ;
- un véhicule (10), en particulier une bicyclette (10), présentant ce qui suit :
∘ un dispositif de mémoire (17) ;
∘ un dispositif de communication de véhicule (11) qui est constitué pour recevoir un code (41) généré sur la base du jeu de données de clé (40) comme code distant (43, 43', 43") via une connexion directe (2) et/ou via un réseau Ad-Hoc (3) ;
∘ une unité de calcul de véhicule (12) qui est constituée pour générer un code local (42, 42', 42") et qui est en outre constituée pour comparer le code distant (43, 43', 43") avec le code local (42, 42', 42") ;
**caractérisé en ce que**
l'unité de calcul de véhicule (12) est en outre constituée pour ouvrir et/ou libérer le véhicule (10) et/ou exécuter un ordre de véhicule (51) lorsque le code distant (43, 43', 43") et le code local (42, 42', 42") concordent.

13. Système (1) selon la revendication 12,
**caractérisé en ce que**
le code local (42, 42', 42") et/ou le code distant (43, 43', 43") sont générés par un procédé à code tournant, par ex. par l'algorithme KeeLoq ou l'algorithme Dual KeeLoq, et/ou sont générés sur la base d'un procédé à code tournant.

14. Système (1) selon l'une des revendications 12 ou 13,
**caractérisé en ce que**
le jeu de données de clé (40) comprend une clé de diversification (45, 45', 45") et le système (1) comprend en outre un terminal mobile (20), sachant que le terminal mobile (20) comprend :
- un dispositif de communication de terminaux (21) qui est constitué pour recevoir un jeu de données de clé (40) ;
- une unité de calcul de terminaux (22) qui est constituée pour générer le code distant (43, 43', 43") en utilisant la clé de diversification (45, 45', 45"), en particulier moyennant un générateur de nombres pseudo-aléatoires (24).
